# EUROPEAN PATENT APPLICATION

(11) **EP 3 404 599 A1**
(43) Date of publication of application: **21.11.2018**
(21) Application number: 18170782.9
(22) Date of filing: 04.05.2018
(51) Int. Cl.: G06Q 10/10, G06Q 10/06, G06Q 50/04

(54) **INFORMATION PROCESSING APPARATUS, METHOD AND PROGRAM**

(30) Priority: 15.05.2017 JP 2017096784
(71) Applicant: FUJITSU LIMITED, Kanagawa 211-8588 (JP)
(72) Inventor: Nozaki, Naoyuki, Kanagawa, 211-8588 (JP)
(74) Representative: Hoffmann Eitle

(57) **Abstract**

An information processing apparatus is configured to receive a request for registration of a first profile which is newly generated or generated by updating an existing profile, the first profile having a standard format, register, in a data base, the first profile at a first location, register, in a processing list, the first profile with first location information indicating the first location, search, by referring to a profile data base which stores referring relationship of profiles, identification information of any profile which refers to the first profile, when a second profile which refers to the first profile is found, register, in the processing list, the second profile with a second location information indicating a location at which the second profile is registered in the data base, and perform processes corresponding to profiles registered in the processing list by referring to data indicating a process to be performed for each profile.

## Description

### TECHNICAL FIELD

The embodiment discussed herein is related to an information processing apparatus, a method and a program.

### BACKGROUND ART

Products are provided to customers via various business processes performed in supply chain management (SCM) areas, such as procurement, manufacturing, and logistics, and in engineering chain management (ECM) areas, such as product planning, design, and manufacturing.

In such business processes, systems making use of information and communication technologies (ICT) are introduced. For example, computer-aided design (CAD), computer-aided engineering (CAE), and the like are utilized in ECM areas, and customer relationship management (CRM), manufacturing execution systems (MESs), and the like are utilized in SCM areas. In addition, these days, an enormous amount of data is being collected from various sensors and the like by using the Internet of Things (IoT) during the manufacturing and distribution processes, and therefore the types and amounts of data dealt with for manufacturing are increasing.

In contrast, various systems for use in business processes usually deal with data in their own formats and therefore do not work in cooperation with each other, which makes it difficult to achieve data sharing, business cooperation, and the like among the systems.

The smart factory coupled with the Internet, such as Industrie 4.0, has been proposed recently, and a platform that serves as an infrastructure for implementing the proposal is attracting much attention. On this platform, data generated in each business process is converted to open, standard formats called profiles, and therefore business systems collect desired data from various types of profiles to achieve cooperation among the systems. Related art techniques are disclosed, for example, in Japanese Laid-open Patent Publication No. 2000-259464.

### SUMMARY

### TECHNICAL PROBLEM

In the platform mentioned above, when data is changed in a system used in some business process, the change sometimes affects data of another system. The range affected in this case depends on the content of the change, and therefore data management is difficult.

In one aspect, an object of the present disclosure is to provide a business cooperation program, a business cooperation method, and a business cooperation apparatus that perform suitable processing when a profile is updated or additionally registered.

### SOLUTION TO PROBLEM

According to an aspect of the invention, an information processing apparatus includes a memory and a processor coupled to the memory and configured to receive a request for registration of a first profile which is newly generated or generated by updating an existing profile, the first profile having a standard format, register, in a data base, the first profile at a first location, register, in a processing list, the first profile with first location information indicating the first location, search, by referring to a profile data base which stores referring relationship of profiles, identification information of any profile which refers to the first profile, when a second profile which refers to the first profile is found, register, in the processing list, the second profile with a second location information indicating a location at which the second profile is registered in the data base, and perform processes corresponding to profiles registered in the processing list by referring to data indicating a process to be performed for each profile.

### ADVANTAGEOUS EFFECTS OF INVENTION

When a profile is updated or additionally registered, suitable processing may be performed.

### BRIEF DESCRIPTION OF DRAWINGS

FIG. 1 is a diagram schematically illustrating a configuration of a business cooperation system according to an embodiment;
FIG. 2 is a diagram illustrating a business object;
FIG. 3 is a diagram for explaining a reference relationship between profiles;
FIG. 4 is a diagram illustrating an example in which profiles are written in JSON format;
FIG. 5 is a diagram illustrating a relationship between data of a business system and a profile;
FIG. 6 is a diagram illustrating an example of a hardware configuration of a server;
FIG. 7 is a functional block diagram of the server;
FIG. 8A is a diagram illustrating an example of a processing list, and FIG. 8B is a diagram illustrating an example of a data structure of a business process DB;
FIG. 9A is a diagram illustrating a business project, and FIG. 9B is a diagram illustrating an example of a configuration definition of the business project;
FIG. 10 is a flowchart illustrating a process executed on a server; and
FIG. 11 is a flowchart illustrating details of processing of step S16 in FIG. 10.

### DESCRIPTION OF EMBODIMENT

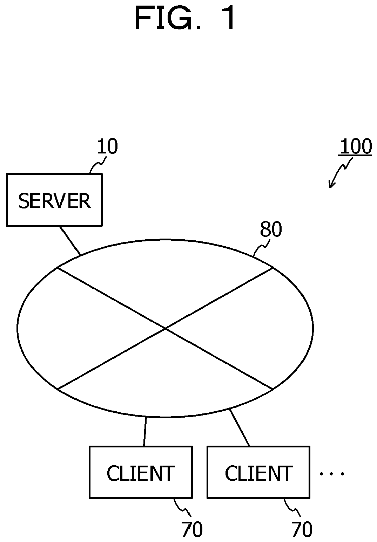

In FIG. 1, the configuration of a business cooperation system 100 according to an embodiment is schematically illustrated. As illustrated in FIG. 1, the business cooperation system 100 includes a server 10 acting as a business cooperation device and a plurality of clients 70 coupled via a network 80 to the server 10. On the client 70, business processes in design and manufacturing of products are executed, and data dealt with in each business process is converted to an open, standard format called a profile and is registered in the server 10. The server 10 manages registered profiles provided from each client 70 and provides profiles to each client 70 as the necessity arises to achieve cooperation in each business process.

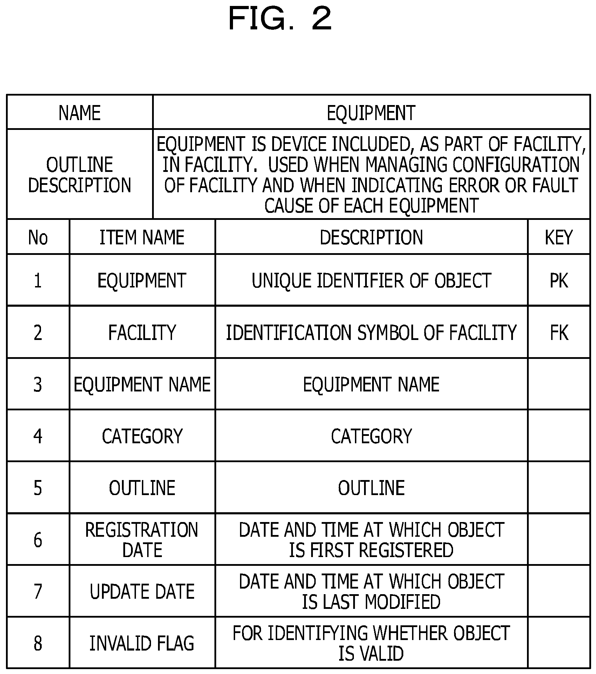

Here, the business object in PSLX3 proposed by Monozukuri advanced planning & scheduling (APS) promotion organization, an incorporated non-profit organization (NPO), has a structure as illustrated in FIG. 2, and the profile describes the structure of a business object in FIG. 2 in a format such as extensible markup language (XML) or JavaScript (registered trademark) object notation (JSON). The business object (profile) in FIG. 2 includes information of "Name" and "Outline Description" as well as information of "Item Name", "Description", and "Key".

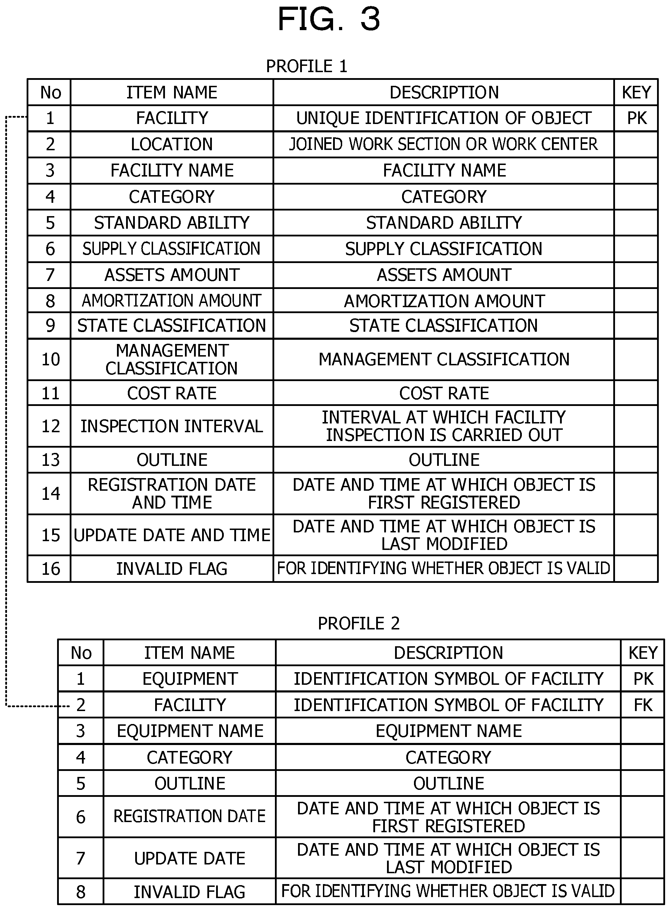

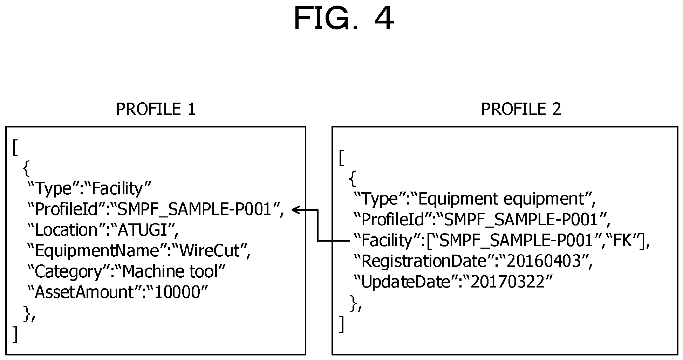

In the profile, the reference relationship with another profile is maintained by using information "PK (Primary Key)" or "FK (Foreign Key)" in "Key". FIG. 3 is a diagram for explaining a reference relationship between profiles. As illustrated in FIG. 3, since "FK" is set as a key of "Item Name" = "Facility" in profile 2, profile 2 references a profile (profile 1) whose first item (item for which a key "PK" is set) is "Facility". In FIG. 4, an example in which profiles are described in JSON format is illustrated. Since, in profile 2 in FIG. 4, the key "FK" is set for "Facility": "SMPF_SAMPLE-P001", profile 1 in which "Type" is "Facility" and "ProfileId" is "SMPF_SAMPLE-P001" is a profile referenced in profile 2.

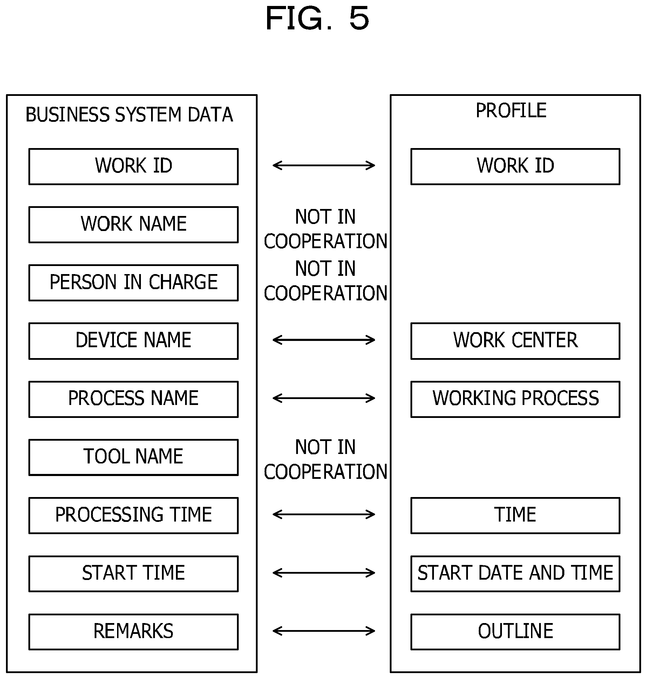

Note that data of a business system generated on the client 70 is converted to a profile in loose cooperation with each other as illustrated in FIG. 5 on the client 70 and is registered in the server 10.

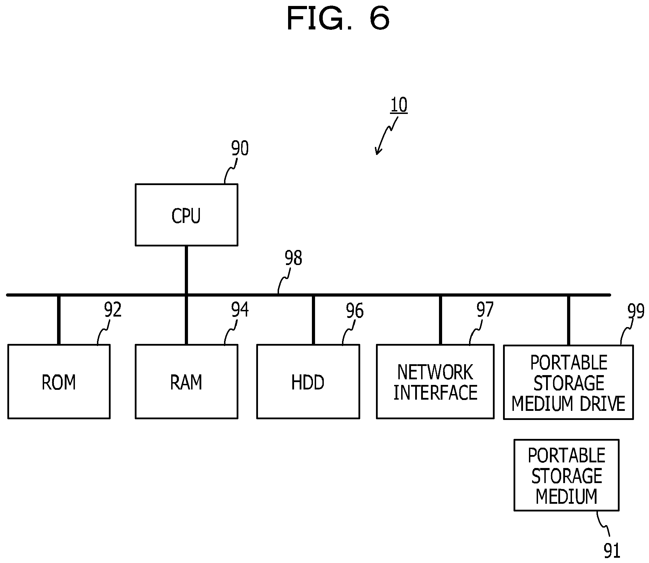

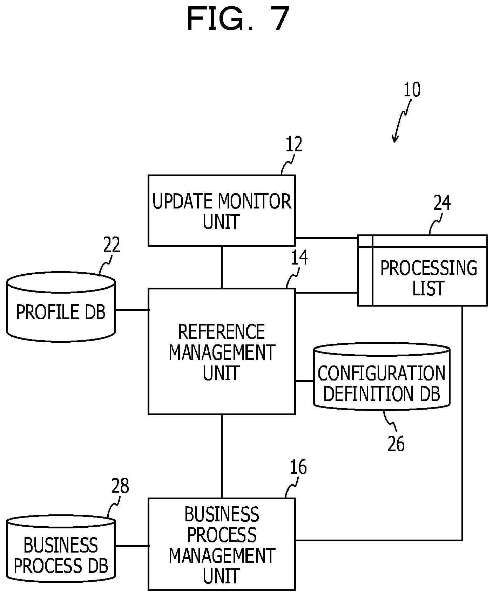

In FIG. 6, a hardware configuration of the server 10 is illustrated. As illustrated in FIG. 6, the server 10 includes a central processing unit (CPU) 90, a read-only memory (ROM) 92, a random access memory (RAM) 94, a storage unit (a hard disk drive (HDD) herein) 96, a network interface 97, a portable storage medium drive 99, and the like. Each of these constituent components of the server 10 is coupled to a bus 98. In the server 10, the function of each component illustrated in FIG. 7 is achieved by the CPU 90 executing a program (including a business cooperation program) stored in the ROM 92 or the HDD 96, or a program (including a business cooperation program) read from a portable storage medium 91 by the portable storage medium drive 99. Note that various DBs and lists stored in the HDD 96 and the like of the server 10 are illustrated in FIG. 7. Note that the server 10 includes hardware requirements, that is a platform, which are determined by a combination of hardware and software such as an operating system that runs on the server 10.

Here, for example, when design change has occurred in a portion on the structure design side of business processes, data of a three-dimensional (3D) model and drawings is changed as design artifacts of the designer. In this case, data of a parts list is changed in light of the changes in data of the 3D model and drawings and, in manufacturing technology divisions and the like, a review of the process flow is carried out and data of a quality control (QC) process chart and operating procedures is updated. Furthermore, in response to these changes, jig designs and production line designs are reviewed in production technology divisions in some cases. In addition, if mass production has started, the changes affect various systems from procurement to the manufacturing execution system on the SCM side.

In such a manner, the effect of a design change propagates across divisions and is exerted on data of various systems used in each division. In the present embodiment, when a profile is updated or a new profile is created on the client 70, the server 10 functions as an update monitor unit 12, a reference management unit 14, and a business-process management unit 16 illustrated in FIG. 7 in order to automatically identify the range that is to be affected by the updating or creating and perform suitable processing.

The update monitor unit 12 monitors whether a profile has been updated or a new profile has been created on the client 70 and a profile registration request has been made, and registers an identifier (for example, an identification (ID)) as information on the profile in the processing list 24 if the registration request has been made.

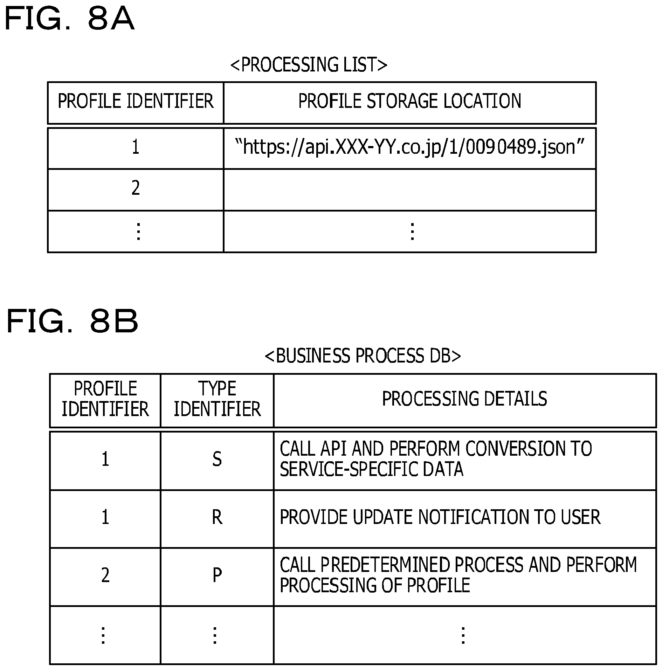

Here, the processing list 24 contains fields "Profile Identifier" and "Profile Storage Location" as illustrated in FIG. 8A. The specific way to use the processing list 24 will be described below.

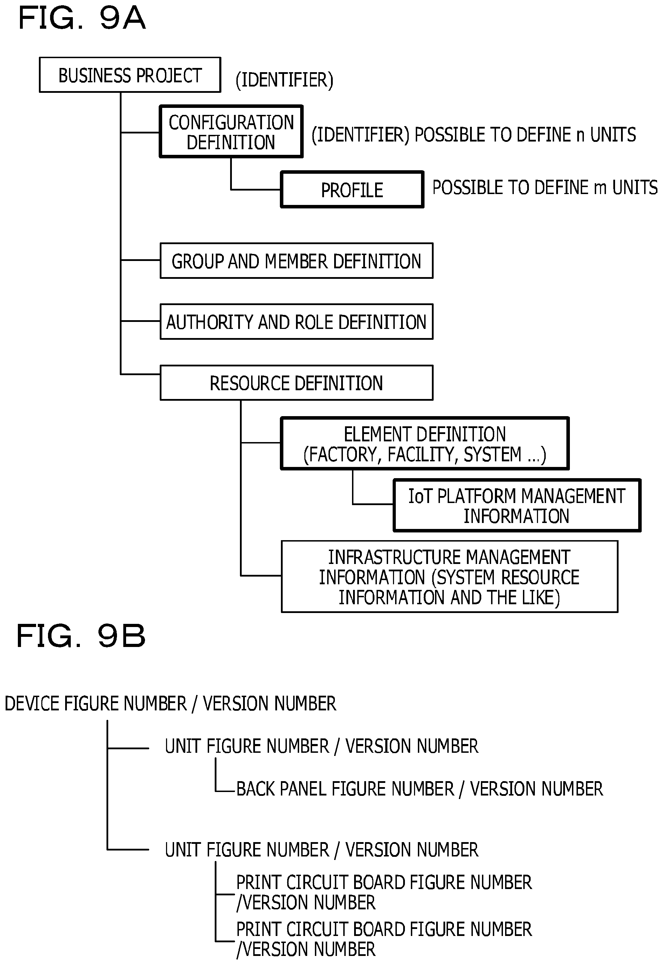

The reference management unit 14 registers a profile (a first profile) the registration of which has been requested, in a configuration definition DB 26 as a third corresponding relationship. Here, as illustrated in FIG. 9A, a business project is defined as a unit that is generated for each project organization, includes a configuration definition, a group and member definition, an authority and role definition, and a resource definition, and manages constituent members and desired resources of the business project, data generated in business operations, and the like. The configuration definition is generated per product, and every profile is bound to be associated with a configuration definition. That is, the configuration definition DB 26 in FIG. 7 stores a profile for each product, and one or a plurality of profiles are associated for one business project. Accordingly, the reference management unit 14 checks for the business project and the product for a profile the registration of which has been requested, and stores the received profile in the corresponding configuration definition DB 26. Note that information indicated by a heavy, solid frame in FIG. 9A refers to information that is updated and dynamically changed on the client 70. In FIG. 9B, an example of a configuration definition of a business project that manages a profile is illustrated. Although an example of a bill of materials (BOM) is illustrated in FIG. 9B, the same is true for a bill of equipment (BOE) and a bill of process (BOP).

The reference management unit 14 further references a profile DB 22 as a first corresponding relationship and the configuration definition DB 26 and extracts a profile (a second profile) that references a profile the registration of which has been requested.

Here, models of profiles (refer to FIG. 3) are stored in the profile DB 22. Accordingly, by referencing the profile DB 22, the reference management unit 14 determines which profile (model) references (has a reference relationship with) which other profile (model). In addition, in the present embodiment, the identifier of a profile the registration of which has been requested includes the same identifier as the corresponding model, and therefore, from the identifier of the profile the registration of which has been requested, the reference management unit 14 is able to identify the identifier of a profile with which the profile the registration of which has been requested has a reference relationship.

The reference management unit 14 also identifies the configuration definition DB 26 in which a profile in the same business project as that of the profile the registration of which has been requested is stored, and extracts a profile having the reference relationship from the identified configuration definition DB 26. At this point, if a profile having the reference relationship is able to be extracted, the reference management unit 14 registers the identifier and the storage location (the address of the configuration definition DB 26), as identification information of the profile having the reference relationship, in the processing list 24. Otherwise, if a profile having the reference relationship is unable to be extracted, only the identifier of the profile (model) having the reference relationship is registered in the processing list 24.

The business process management unit 16 references the processing list 24 and sets one of the profiles registered in the processing list 24 as a target process. The business process management unit 16 then references the business process DB 28 as a second corresponding relationship and performs processing corresponding to the target profile.

Here, the business process DB 28, as illustrated in FIG. 8B, contains fields called "Profile Identifier" "Type Identifier", and "Processing Details". In the example of FIG. 8B, for example, when a profile with a profile identifier "1" is registered in the processing list 24, the business process management unit 16 calls an application programming interface (API) provided by a service leading to a platform and automatically performs conversion to service-specific data and the like, as processing with a type identifier "S". The business process management unit 16 also provides an update notification or the like via email or the like to a person in charge of business operations corresponding to the profile, as processing with a type identifier "R". In addition, for example, when a profile with a profile identifier "2" is registered in the processing list 24, the business process management unit 16 calls a process (for example, a process ID "Mex0yy.exe %1") inside the platform, as processing with a type identifier "P", and automatically performs processing and the like of the profile. Note that although processing with the type identifiers S, R, and P is listed by way of example in FIG. 8B, processing is not limited to this and processing with type identifiers other than S, R, and P may be listed.

### (Process of Server 10)

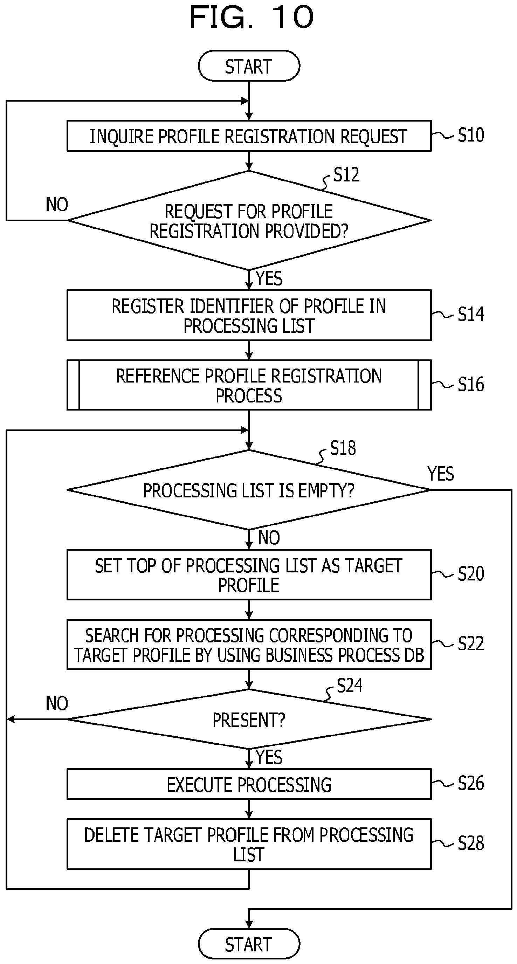

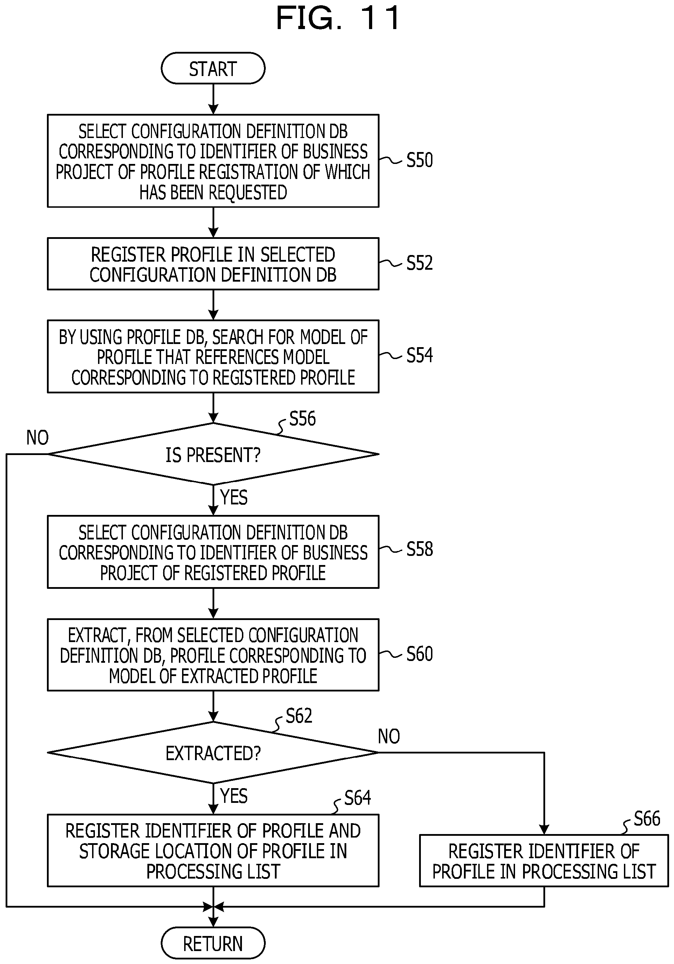

Next, the details of a process executed in the server 10 will be described in accordance with flowcharts in FIG. 10 and FIG. 11. Note that, at the stage at which the process in FIG. 10 begins, the processing list 24 is assumed to be empty.

In the process in FIG. 10, first, in step S10, the update monitor unit 12 inquires whether a profile registration request has been provided from the client 70. Note that the meaning of a profile registration request is that data updated or newly created on any client 70 is converted to a profile and is transmitted to the server 10. Subsequently, in step S12, the update monitor unit 12 determines whether a request for profile registration has been provided from the client 70. If the determination in step S12 is negative, the update monitor unit 12 returns to step S10; however, if affirmative, the update monitor unit 12 proceeds to step S14.

If the determination in step S12 is affirmative, the update monitor unit 12 proceeds to step S14, where the update monitor unit 12 registers the identifier of the profile in the processing list 24. For example, when a request for registration of a profile with an identifier = "2" has been made, the update monitor unit 12 registers "2" in the "Profile Identifier" field of the processing list 24.

Subsequently, in step S16, the reference management unit 14 executes a subroutine of a reference profile registration process. Specifically, the reference management unit 14 executes a process in accordance with the flowchart in FIG. 11.

In the process in FIG. 11, first, in step S50, the reference management unit 14 selects the configuration definition DB 26 corresponding to the identifier (for example, ID) of a business project of the profile the registration of which has been requested.

Subsequently, in step S52, the reference management unit 14 registers the profile in the selected configuration definition DB 26. In this case, the reference management unit 14 registers, in the processing list 24, a location at which the profile is registered (profile storage location), in association with the profile identifier registered in step S14.

Subsequently, in step S54, the reference management unit 14 searches for the model of a profile that references (has a reference relationship with) a model corresponding to the registered profile by using the profile DB 22. Note that, in step S54, when profiles are tied in a row in their reference relationships, such as the case where a profile that references the registered profile is further referenced by another profile, all of the profiles included in the reference relationships are to be searched for.

Subsequently, in step S56, the reference management unit 14 determines whether, as a result of the search in step S54, the model of a profile that references the model corresponding to the registered profile is present. If the determination in step S56 is negative, the reference management unit 14 directly terminates the process in FIG. 11 and proceeds to step S10 in FIG. 10. Otherwise, if the determination in step S56 is affirmative, the reference management unit 14 proceeds to step S58.

Upon proceeding to step S58, the reference management unit 14 selects the configuration definition DB 26 corresponding to the identifier of the business project of the registered profile.

Subsequently, in step S60, the reference management unit 14, from the selected configuration definition DB 26, extracts a profile corresponding to the model of the extracted profile. Specifically, the reference management unit 14 extracts a profile having the same identifier as the model of the extracted profile from the selected configuration definition DB 26.

Subsequently, in step S62, the reference management unit 14 determines whether a profile has been extracted from the configuration definition DB 26 in step S60. If the determination in step S62 is affirmative, the process proceeds to step S64, where the reference management unit 14 registers the identifier of the profile and the storage location of the profile in the processing list 24. For example, the reference management unit 14 registers, in the processing list 24, the identifier "1" of the profile that references the profile the registration of which has been requested and the specific address of the profile storage location, as illustrated in FIG. 8A.

Otherwise, if the determination in step S62 is negative, that is, a profile is not extracted from the configuration definition DB 26 in step S60, the process proceeds to step S66, where the reference management unit 14 registers only the identifier of the profile in the processing list 24.

Note that when a plurality of profiles are searched for in step S54, steps S58 to S64 (or S66) are to be executed for each profile.

As described above, after step S64 or step S66 has been executed for all of the profiles searched for, all of the process in FIG. 11 is complete and the process proceeds to step S18 in FIG. 10.

Returning to FIG. 10, the process proceeds to step S18, where the business process management unit 16 determines whether the processing list 24 is empty. If the determination in this step S13 is affirmative, all of the process in FIG. 10 is complete; however, if the determination is negative, the process proceeds to step S20. Note that when, after the start of the process in FIG. 10, the process first proceeds to step S18, the determination in step S18 is to be negative.

If the determination in step S18 is negative, the process proceeds to step S20, where the business process management unit 16 sets the top of the processing list 24 as a target profile. With the processing list 24 in FIG. 8A, a profile with a profile identifier = 1 is a target profile.

Subsequently, in step S22, the business process management unit 16 searches for processing corresponding to the target profile by using the business process DB 28.

Subsequently, in step S24, the business process management unit 16 determines whether the corresponding processing is present. If the determination in step S24 is negative, the process returns to step S18; however, if the determination is affirmative, the process proceeds to step S26.

Upon proceeding to step S26, the business process management unit 16 executes the processing searched for. For example, in the case where the profile identifier =1, in accordance with FIG. 8B, the business process management unit 16 calls an API provided by a service leading to a platform, for example, by using a predetermined address, "https://api.XXX-YY.co.jp/1/num?id=zzzz", and automatically performs conversion to service-specific data, or the like. In addition, the business process management unit 16 performs an update notification or the like via email or the like to a person in charge of the corresponding business operations, as processing of the type identifier "R".

Subsequently, in step S28, the business process management unit 16 deletes the record of the target profile from the processing list 24. Thereafter, the process returns to step S18 and the processing determinations of steps S18 to S28 is repeatedly executed until the processing list 24 becomes empty. Note that, in the case where only the identifier is registered as information of the target profile in the processing list 24, the business process management unit 16 is assumed not to execute the process. At the stage at which the processing list 24 has become empty, the determination in step S18 is affirmative and all of the process in FIG. 10 is complete.

As understood from the description hereinbefore, in the present embodiment, the update monitor unit 12 functions as a registration unit that registers identification information of an updated or additionally registered profile in the processing list 24. Furthermore, the business process management unit 16 functions as an execution unit that executes processing corresponding to a profile registered in a processing list.

As described above in detail, according to the present embodiment, if a profile in which data generated in business operations is converted to a standardized structure is updated or additionally registered (S12: affirmative), the update monitor unit 12 registers identification information on the updated or additionally registered profile in the processing list 24 (S14). In addition, based on the profile DB 22 that associates reference relationships between profiles, the reference management unit 14 determines whether a profile that references the registered profile is present or absent (S16, S56), and adds identification information of the referencing profile to the processing list 24 (S64) if the referencing profile is present (S56: affirmative). The business process management unit 16 then executes processing corresponding to the profile registered in the processing list 24 based on the business process DB 28 that associates the identification information of profiles with processing to be executed (S26). Thus, in the present embodiment, when a profile is updated or additionally registered, processing and notifications for a business system affected by update or additional registration of the profile may be automatically performed. In this case, processing to be performed is determined based on the profile DB 22 and the business process DB 28 and therefore it becomes possible to completely perform processing to be performed. Accordingly, compared with the case where a person confirms the affected range, less man-hours are to be used, allowing the occurrences of reworking caused by a communication error, an error in determination of the affected range, or the like to be reduced. This allows profiles to be effectively maintained and managed.

In addition, according to the present embodiment, profiles are managed on a business project-by-business project basis with the configuration definition DB 26, and the reference management unit 14 extracts, from the configuration definition DB 26, a profile that shares a business project with a registered profile and references the registered profile (S60). This makes it possible to extract a profile that references a registered profile and whose business project is the same as the registered profile. Accordingly, a suitable profile may be extracted within the range affected by the registered profile.

Note that although the case where the reference management unit 14 extracts, from the configuration definition DB 26, a profile that shares a business project with a registered profile and references the registered profile has been described in the above embodiment, the present disclosure is not limited to this case. That is, the reference management unit 14 may narrow down profiles that are highly likely to reference a profile that is, for example, updated, in a different way from the above embodiment. For example, profiles may be narrowed down by using the creator, the date and time of creation, or the like of a profile. In addition, the reference management unit 14 may extract all of the profiles that are likely to reference the registered profile.

Note that although the case where the profiles are structured document files has been described in the above embodiment, the present disclosure is not limited to this case.

Note that although the case where data generated in business operations is converted to profiles on the client 70 has been described in the above embodiment, the present disclosure is not limited to this case and data generated on the client 70 may be converted to profiles on the server 10. In addition, the user may generate data by making use of a service provided on the server 10. In this case, it is sufficient that the server 10 convert the generated data to profiles.

Note that the processing functions described above may be achieved by a computer. In such a case, a program in which processing details of the functions that a processing apparatus is to have are described is provided. By a computer executing the program, the functions described above are achieved on the computer. The program in which the processing details are described may be recorded on a computer-readable recording medium (except for carrier waves).

When a program is distributed, for example, the program is sold in the form of a portable recording medium, such as a digital versatile disc (DVD) or a compact disc read-only memory (CD-ROM), on which the program is recorded. In addition, the program may be stored in a storage device such as a server computer and be transferred via a network from the server computer to another computer.

A computer that executes a program stores, in its own storage device, a program recorded on a portable recording medium or a program transferred from a server computer. The computer then reads the program from its own storage device and executes processing in accordance with the program. Note that the computer may read a program directly from a portable recording medium and execute processing in accordance with the program. In addition, each time a program is transferred from a server computer, the computer may sequentially execute processing in accordance with the received program.

## Claims

1. An information processing apparatus comprising:
a memory; and
a processor coupled to the memory and configured to:
receive a request for registration of a first profile which is newly generated or generated by updating an existing profile, the first profile having a standard format;
register, in a data base, the first profile at a first location;
register, in a processing list, the first profile with first location information indicating the first location;
search, by referring to a profile data base which stores referring relationship of profiles, identification information of any profile which refers to the first profile;
when a second profile which refers to the first profile is found, register, in the processing list, the second profile with a second location information indicating a location at which the second profile is registered in the data base; and
perform processes corresponding to profiles registered in the processing list by referring to data indicating a process to be performed for each profile.

2. The information processing apparatus according to claim 1, wherein
when the second location information is not registered, the processor is configured not to perform the processes.

3. The information processing apparatus according to claim 1, wherein
the profiles are generated by executing business operations.

4. The information processing apparatus according to claim 3, wherein
in searching of the any profile which refers to the first profile, the processor is configured to determine the second profile that shares the business operation with the first profile, based on corresponding relationship information that associates the profiles with each business operations.

5. The information processing apparatus according to claim 4, wherein
the first profile and the second profile are transmitted to the information processing apparatus through a network.

6. A method executed by a computer, the method comprising:
receiving a request for registration of a first profile which is newly generated or generated by updating an existing profile, the first profile having a standard format;
registering, in a data base, the first profile at a first location;
registering, in a processing list, the first profile with first location information indicating the first location;
searching, by referring to a profile data base which stores referring relationship of profiles, identification information of any profile which refers to the first profile;
when a second profile which refers to the first profile is found, registering, in the processing list, the second profile with a second location information indicating a location at which the second profile is registered in the data base; and
performing processes corresponding to profiles registered in the processing list by referring to data indicating a process to be performed for each profile.

7. The method according to claim 6, wherein
when the second location information is not registered, the processes are not performed.

8. The method according to claim 6, wherein
the profiles are generated by executing business operations.

9. The method according to claim 8, wherein
in the searching of the any profile which refers to the first profile, the processor is configured to determine the second profile that shares the business operation with the first profile, based on corresponding relationship information that associates the profiles with each business operations.

10. The method according to claim 9, wherein
the first profile and the second profile are transmitted to the information processing apparatus through a network.

11. A program that causes an information processing apparatus to execute operations, the operations comprising:
receiving a request for registration of a first profile which is newly generated or generated by updating an existing profile, the first profile having a standard format;
registering, in a data base, the first profile at a first location;
registering, in a processing list, the first profile with first location information indicating the first location;
searching, by referring to a profile data base which stores referring relationship of profiles, identification information of any profile which refers to the first profile;
when a second profile which refers to the first profile is found, registering, in the processing list, the second profile with a second location information indicating a location at which the second profile is registered in the data base; and
performing processes corresponding to profiles registered in the processing list by referring to data indicating a process to be performed for each profile.

12. The non-transitory computer-readable storage medium according to claim 11, wherein
when the second location information is not registered, the processes are not performed.

13. The non-transitory computer-readable storage medium according to claim 11, wherein
the profiles are generated by executing business operations.

14. The non-transitory computer-readable storage medium according to claim 13, wherein
in the searching of the any profile which refers to the first profile, the processor is configured to determine the second profile that shares the business operation with the first profile, based on corresponding relationship information that associates the profiles with each business operations.

15. The non-transitory computer-readable storage medium according to claim 14, wherein
the first profile and the second profile are transmitted to the information processing apparatus through a network.
